# EUROPEAN PATENT APPLICATION

(11) **EP 4 613 424 A1**
(43) Date of publication of application: **10.09.2025**
(21) Application number: 22967817.2
(22) Date of filing: 07.12.2022
(51) Int. Cl.: B23Q 11/00

(54) **FLUID NOZZLE**

(71) Applicant: DMG Mori Co., Ltd., Yamatokoriyama-shi, Nara 639-1160 (JP)
(72) Inventor: NORO, Yuta, Yamatokoriyama-shi, Nara 639-1160 (JP)
(74) Representative: Isarpatent
(86) International application number: PCT/JP2022/045075
(87) International publication number: WO 2024/121966

(57) **Abstract**

The fluid nozzle (20) is configured by stacking an obverse side plate member (21) having a fluid supply hole (21a), a reverse side plate member (22) arranged on the reverse side of the obverse side plate member (21), and a first intermediate plate member (23) and a second intermediate plate member (24) in which a fluid passage (26) is formed. The fluid passage (26) includes an inlet opening (23a) and a plurality of inlet cut-out portions (23b) formed in the first intermediate plate member (23), and a plurality of ejection cut-out portions (24a) formed in the second intermediate plate member (24). The plurality of ejection cut-out portions (24a) are arranged and spaced apart from each other along the lower edge of the second intermediate plate member (24) and are open to the lower edge side. The inlet opening (23a) is formed to span the plurality of ejection cut-out portions (24a), and each of the inlet cut-out portions (23b) is formed to have a recessed shape that opens toward the inlet opening (23a) side and overlaps with a portion of each of the ejection cut-out portions (24a) when viewed in the plate-thickness direction.

## Description

### [TECHNICAL FIELD]

The present invention relates to a fluid nozzle that discharges a fluid.

### [BACKGROUND ART]

Traditionally, a fluid nozzle has been known that is mounted on a machine tool or the like and ejects fluid onto a predetermined portion for purposes such as removing cutting chips produced during machining and cooling frictional heat.

In this type of fluid nozzle, various configurations have been proposed to supply fluids over a wide area. For example, in a fluid nozzle disclosed in Patent Document 1, a horizontally extending slit-shaped ejection hole is formed in a coolant reservoir so that coolant (an example of a fluid) is ejected from the ejection hole in a curtain-like manner to supply the coolant over a wide area.

### [PRIOR ART DOCUMENTS]

### [PATENT DOCUMENTS]

[Patent Document 1] Japanese Patent Application Laid-Open No. H10-156660

### [SUMMARY OF THE INVENTION]

### [PROBLEM TO BE SOLVED]

However, in the fluid nozzle shown in Patent Document 1, there is a problem in that the installation position is limited because a large coolant reservoir is required.

Further, since a slit-like ejection hole is formed throughout the entire longitudinal direction of the coolant reservoir, there is a problem in that if the flow rate of the coolant (fluid) supplied to the coolant reservoir is low, the coolant ejected from the ejection hole cannot be effectively diffused in a curtain-like manner. To avoid this problem, it is conceivable to increase the supply flow rate of the coolant by enlarging the pump that supplies the coolant to the coolant reservoir. However, this requires a large pump, causing an increase in the cost.

The present invention has been made in view of the above circumstances, and an object thereof is to provide a fluid nozzle that can reliably discharge fluid over a wide area with a compact and inexpensive configuration.

### [SOLUTION TO PROBLEM]

One aspect of the present invention relates to a fluid nozzle configured to eject a fluid, wherein:
the fluid nozzle is configured by stacking a plurality of plate members in a plate-thickness direction;
the plurality of plate members includes:
   an obverse side plate member having a fluid supply hole penetrating in the plate-thickness direction,
   a reverse side plate member arranged on a reverse side of the obverse side plate member, and
   a first intermediate plate member and a second intermediate plate member that are sequentially arranged from the obverse side toward the reverse side in the plate-thickness direction between the obverse side plate member and the reverse side plate member and have a fluid passage formed therein;
the second intermediate plate member has a plurality of ejection cut-out portions that are aligned and spaced apart from each other along an outer edge of the second intermediate plate member and open to the outer edge side;
the first intermediate plate member has an inlet opening that is formed to span the plurality of ejection cut-out portions formed in the second intermediate plate member when viewed in the plate-thickness direction and that receives a fluid supplied from the fluid supply hole and guides the fluid to each of the ejection cut-out portions, and a plurality of inlet cut-out portions that are connected to an outer edge of the inlet opening, each of which, when viewed in the plate-thickness direction, has a recessed shape that opens to the inlet opening side, and overlaps with a portion of each of the plurality of ejection cut-out portions; and
the inlet opening, the plurality of inlet cut-out portions, and the plurality of ejection cut-out portions form the fluid passage.

With this fluid nozzle, the fluid supplied from the fluid supply port formed in the obverse side plate member is first supplied to the inlet opening formed in the first intermediate plate member and spreads over the entire inlet opening. Since this inlet opening is formed to span the plurality of ejection cut-out portions formed in the second intermediate plate member when viewed in the plate-thickness direction, the fluid supplied into the inlet opening is supplied to each of the ejection cut-out portions and is ejected to the outside from the open-side end portion of each ejection cut-out portion. At the outer edge of the inlet opening, the plurality of inlet cut-out portions are formed. Each inlet cut-out portion has a recessed shape that opens to the inlet opening side and overlap with a portion of each ejection cut-out portion. This configuration allows smooth supply of the fluid from the inlet opening to each of the ejection cut-out portions, and consequently ensures a sufficient discharge flow rate of fluid from each of the ejection cut-out portions.

That is, in a stacked-type fluid nozzle having plate members stacked as in the present invention, the overall thickness of the nozzle can be reduced to improve space efficiency. However, the fluid passage inside the nozzle, namely the passage cross-sectional area in the inlet opening and the ejection cut-out portions, becomes narrower, resulting in poor fluid flow. In particular, when the fluid is supplied from the inlet opening to each of the ejection cut-out portions, the conduit resistance increases due to rapid narrowing of the passage area, which may result in an insufficient supply of fluid from the inlet opening to each of the ejection cut-out portions. In the fluid nozzle of the present invention, on the other hand, the first intermediate plate member has the plurality of inlet cut-out portions that are each formed so as to overlap with a portion of each the ejection cut-out portion when viewed in the plate-thickness direction. In this manner, an additional passage cross-sectional area corresponding to the thickness of the first intermediate plate member can be ensured for the fluid flowing from the inlet opening into each of the ejection cut-out portions. Therefore, the conduit resistance for the fluid flowing from the inlet opening to each of the ejection cut-out portions can be reduced, thereby ensuring a sufficient flow rate of the fluid.

It is preferable to adopt a configuration in which an open-side end portion of each of the ejection cut-out portions is formed as a flared portion whose dimension in the passage width direction orthogonal to the plate-thickness direction increases from the upstream side to the downstream side in the fluid ejection direction.

With this configuration, at the open-side end portion of each ejection cut-out portion, the fluid spreads in the passage width direction along the inner wall surface of the flared portion and is ejected in a film-like form. Therefore, for example, a broader fluid ejection range can be ensured as compared to a case where the fluid is ejected in a linear shape from each of the ejection cut-out portions.

It is possible to adopt a configuration in which: the obverse side plate member, the reverse side plate member, the first intermediate plate member and the second intermediate plate member are vertically arranged; each of the ejection cut-out portions is formed to open downward; and the lower end position of each of the inlet cut-out portions is at the same height as, or higher than, the upper end position of the flared portion of each of the ejection cut-out portions.

With this configuration, the lower end position of each of the inlet cut-out portions is at the same height as, or higher than, the upper end position of the flared portion of each of the ejection cut-out portions. Therefore, the fluid introduced into each of the inlet cut-out portions through the inlet opening can be supplied to a portion higher than the flared portion in each of the ejection cut-out portions. Therefore, the fluid can be smoothly spread without flow separation over the entire area from the upper end to the lower end of the flared portion. Therefore, the effect of widening the fluid at the flared portion can be reliably achieved.

It is possible to adopt a configuration in which the portion extending from the proximal end portion to the flared portion of each ejection cut-out portion is formed as a straight portion comprising a linear slit hole.

With this configuration, the fluid can be supplied to the flared portion after sufficiently increasing the flow speed of the fluid by the slit-shaped straight portion. Therefore, a sufficient flow speed of the fluid flowing into the flared portion can be ensured, and consequently, the effect of widening the fluid at the flared portion can be reliably achieved.

### [ADVANTAGEOUS EFFECT OF THE INVENTION]

The present invention is made in view of the above circumstances. A fluid nozzle is configured by stacking an obverse side plate member, a reverse side plate member, and a first intermediate plate member and a second intermediate plate member positioned between the obverse side plate member and the reverse side plate member. The second intermediate plate member has a plurality of ejection cut-out portions that are formed to be aligned along the outer edge of the second intermediate plate member and open to the outer edge side. The first intermediate plate member has an inlet opening that is formed to span the plurality of ejection cut-out portions formed in the second intermediate plate member when viewed in the plate-thickness direction and receives a fluid supplied from the fluid supply hole and guides the fluid to each of the ejection cut-out portions, and a plurality of inlet cut-out portions that are connected to an outer edge of the inlet opening, each of which, when viewed in the plate-thickness direction, has a recessed shape that opens to the inlet opening side and overlaps with a portion of each of the plurality of ejection cut-out portions. Thus, it is possible to reliably eject a fluid over a wide area with a compact and inexpensive configuration.

### [BRIEF DESCRIPTION OF THE DRAWINGS]

[FIG. 1] FIG. 1 is a perspective view illustrating a schematic configuration of a machine tool having a fluid nozzle according to an embodiment.
[FIG. 2] FIG. 2 is a side view as seen in the direction of arrow A in FIG. 1.
[FIG. 3] FIG. 3 is a side view of a fluid nozzle as seen from the obverse side.
[FIG. 4] FIG. 4 is an exploded perspective view showing the fluid nozzle.
[FIG. 5] FIG. 5 is a perspective view of the fluid nozzle as seen from the reverse side, with a reverse side plate member of the fluid nozzle removed.
[FIG. 6] FIG. 6 is an enlarged view of a portion VI in FIG. 5.
[FIG. 7] FIG. 7 is a cross-sectional view taken along the line VII-VII in FIG. 3.
[FIG. 8] FIG. 8 is an explanatory diagram illustrating a coolant flow pathway in the fluid nozzle.
[FIG. 9] FIG. 9 is a diagram corresponding to FIG. 7, showing a comparative example.
[FIG. 10] FIG. 10 is a schematic side view of the fluid nozzle as seen from the obverse side, showing an example of another embodiment.
[FIG. 11] FIG. 11 is a diagram corresponding to FIG. 10, showing another example of the other embodiment.

### [DESCRIPTION OF EMBODIMENTS]

Embodiments of the present invention will be described below with reference to the drawings.

### <Embodiments>

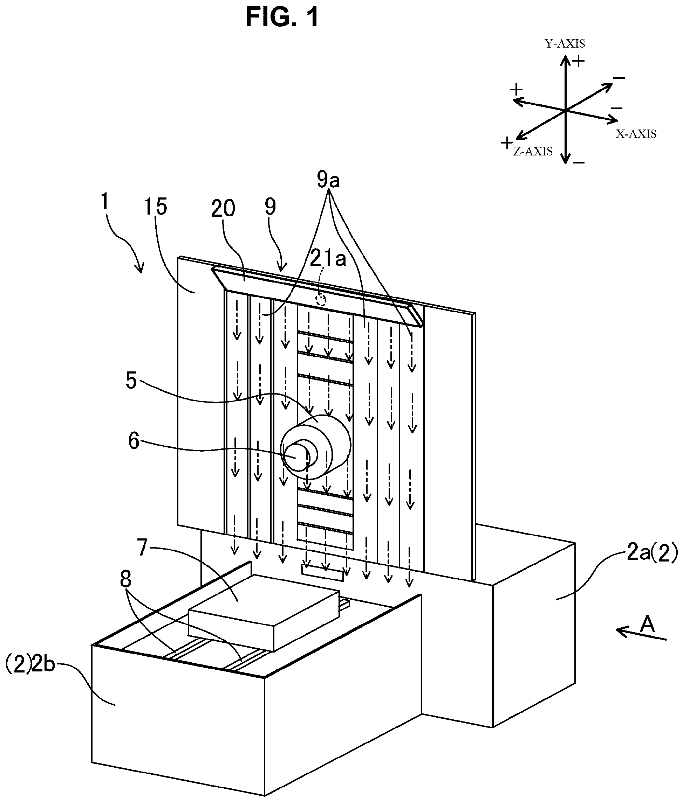

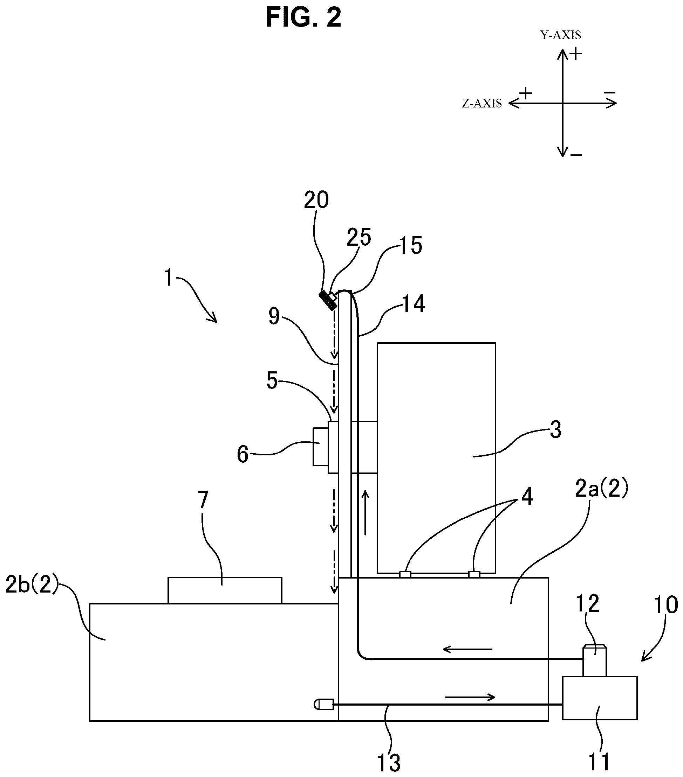

FIG. 1 and FIG. 2 show a machine tool 1 including a fluid nozzle 20 of an embodiment. The machine tool 1 is a horizontal machining center, including a bed 2, a column 3, a spindle head 5, a spindle 6, a table 7, and a protective cover 9. The fluid nozzle 20 ejects coolant along the protective cover 9 of the machine tool 1, as will be described later (see the two-dot chain line in FIG. 1 and FIG. 2). Note that FIG. 1 and FIG. 2, which show the entire machine tool 1, only illustrate the elements that are the main components in the present embodiment.

The bed 2 includes a linearly-shaped first bed 2a and a linearly-shaped second bed 2b that is connected orthogonally to the first bed 2a, so that the bed 2 has a substantially T-shape in a plan view. The table 7 is arranged on the second bed 2b and is guided on guide rails 8 so as to advance and retract relative to the first bed 2a, that is, to move in the arrow-indicated horizontal Z-axis direction.

The column 3 is arranged on the first bed 2a (see FIG. 2) and is guided by guide rails 4 so as to move in the arrow-indicated X-axis direction that is horizontally orthogonal to the Z-axis (i.e., in a direction perpendicular to the sheet surface of FIG. 2). The spindle head 5 rotationally supports the spindle 6 and is held by the column 3 so as to be movable in the vertical Y-axis direction orthogonal to the X-axis and the Z-axis. Thus, the spindle head 5 moves in the X-Y axis plane.

The protective cover 9 is configured by connecting a plurality of cover bodies 9a (see FIG. 1) with a pantograph mechanism (not shown) provided on a rear side thereof. The protective cover 9 is attached to a frame-like sheet metal frame 15 positioned in a standing posture on the first bed 2a, and is arranged so as to separate the column 3 and the proximal end side portion of the spindle head 5 from the machining area (a region above the second bed 2b).

The fluid nozzle 20 is arranged with a slight gap from the front surface of the upper end portion of the sheet metal frame 15, and extends in the X-axis direction when viewed from the front side of the machine tool 1. The fluid nozzle 20 is inclined at substantially 45° with respect to the vertical direction (Y-axis direction) such that the lower edge is located rearward of the upper edge when viewed from the X-axis direction. The fluid nozzle 20 is fixed to the sheet metal frame 15 with bolts via L-shaped brackets (not shown) provided at both end portions in the longitudinal direction of the fluid nozzle 20. The fluid nozzle 20 causes a coolant supplied from a coolant supply device 10 (see FIG. 2) installed on the rear side of the machine tool 1 to flow downward along the front surface of the protective cover 9. As a result, cutting chips and other foreign matter adhering to the front surface of the protective cover 9 are washed away and removed by the coolant. The coolant having reached the lower end of the protective cover 9 flows downward from the upper surface of the second bed 2b, and then is returned to a coolant tank 11 of the coolant supply device 10 through a return conduit 13. In the coolant supply device 10, the returned coolant is filtered, and the filtered coolant is re-supplied to the fluid nozzle 20 through a supply conduit 14 by the power of a coolant pump 12. Thus, the coolant flows along a series of circulation pathways (see arrows in FIG. 2) via the coolant supply device 10 and the fluid nozzle 20.

### [Configuration of Fluid Nozzle]

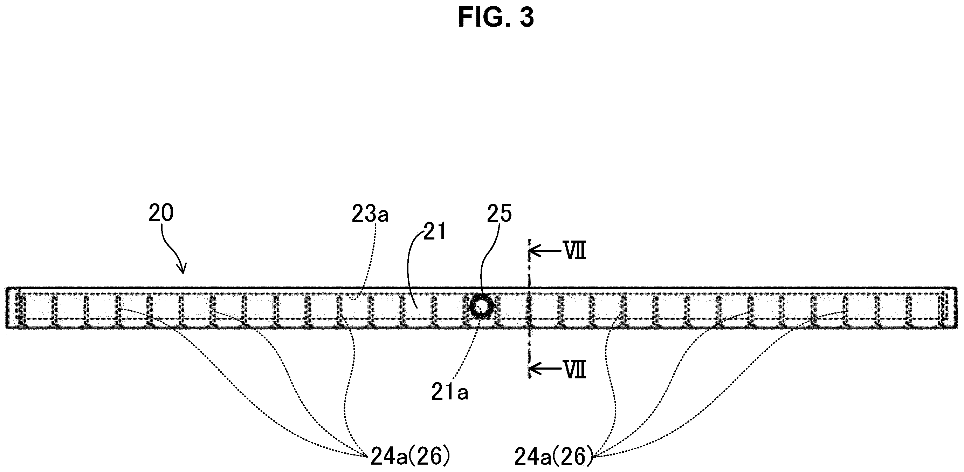

As shown in FIG. 3, the fluid nozzle 20 has a flat rectangular shape in overall view, and is vertically arranged such that its thickness direction is oriented horizontally (in this example, in the Z-axis direction). On an obverse side surface of the fluid nozzle 20, a coolant supply hole 21a (corresponding to a fluid supply hole) is formed. The fluid nozzle 20 is arranged with the coolant supply hole 21a oriented toward the rear side of the machine tool 1 (see FIG. 1). The fluid nozzle 20 is configured to branch the coolant supplied from the coolant supply hole 21a into a plurality of streams, and then eject the coolant from a lower end surface of the nozzle.

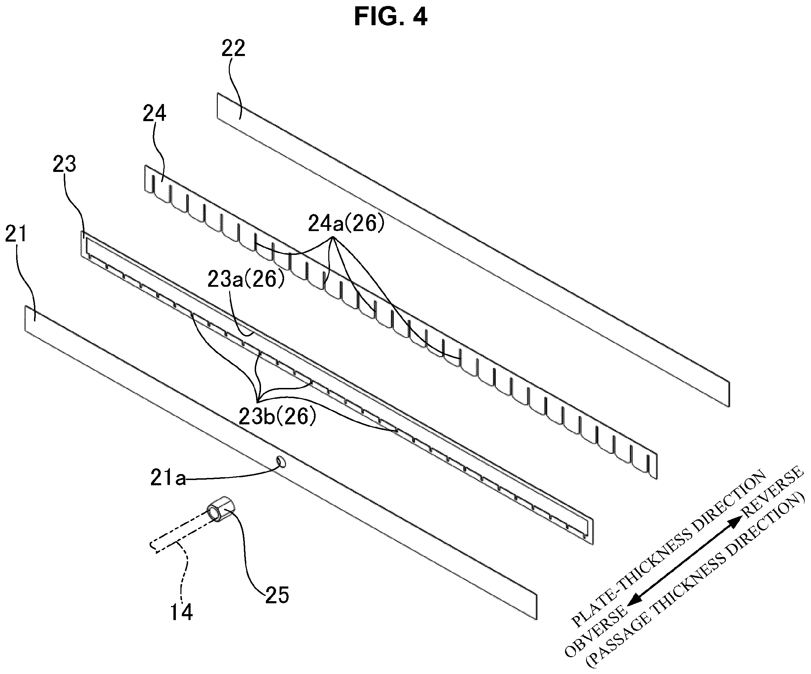

Specifically, the fluid nozzle 20 is configured by stacking four plate members 21 to 24 in a plate-thickness direction, as shown in FIG. 4. Each of the plate members 21 to 24 has a rectangular shape as seen in the plate-thickness direction, and is composed of, for example, a metal material such as aluminum. The plate members are joined to each other by an adhesive. Note that it is not always necessary to use an adhesive to join the plate members together, and for example, the plate members may be joined by using only bolts.

The four plate members 21 to 24 include: an obverse side plate member 21, a reverse side plate member 22 arranged on the reverse side of the obverse side plate member 21, and a first intermediate plate member 23 and a second intermediate plate member 24 arranged between the obverse side plate member 21 and the reverse side plate member 22. The first intermediate plate member 23 and the second intermediate plate member 24 are arranged in this order from the obverse side to the reverse side of the fluid nozzle 20.

The obverse side plate member 21 has the coolant supply hole 21a in a middle portion in the longitudinal direction thereof. The coolant supply hole 21a has a circular shape, and a threaded conduit joint 25 is screwed into the coolant supply hole 21a. The conduit joint 25 is connected to the supply conduit 14, and the coolant from the coolant supply device 10 is supplied to the coolant supply hole 21a through this supply conduit 14.

A fluid passage 26 is formed in the first and second intermediate plate members 23 and 24, through which the coolant supplied from the coolant supply hole 21a flows.

The fluid passage 26 includes an inlet opening 23a and a plurality of inlet cut-out portions 23b formed in the first intermediate plate member 23, and a plurality of ejection cut-out portions 24a formed in the second intermediate plate member 24.

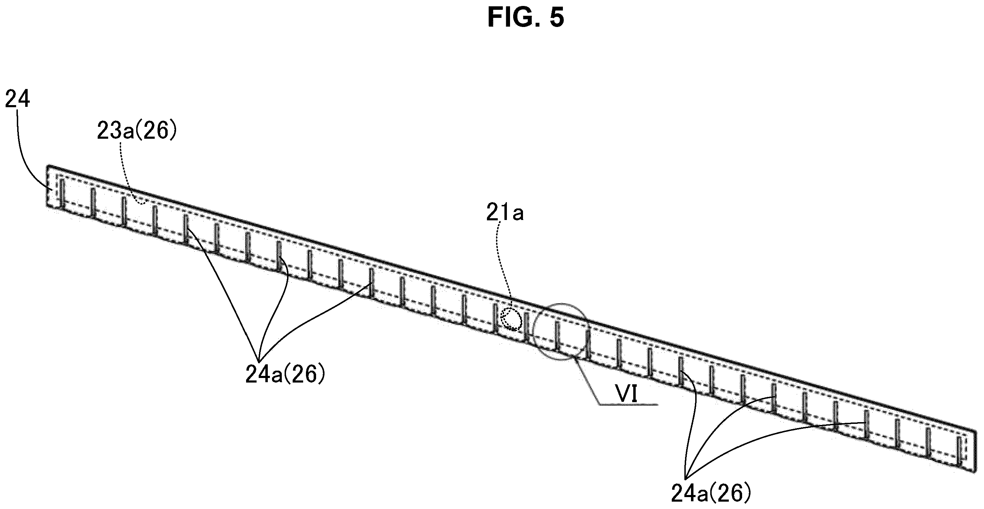

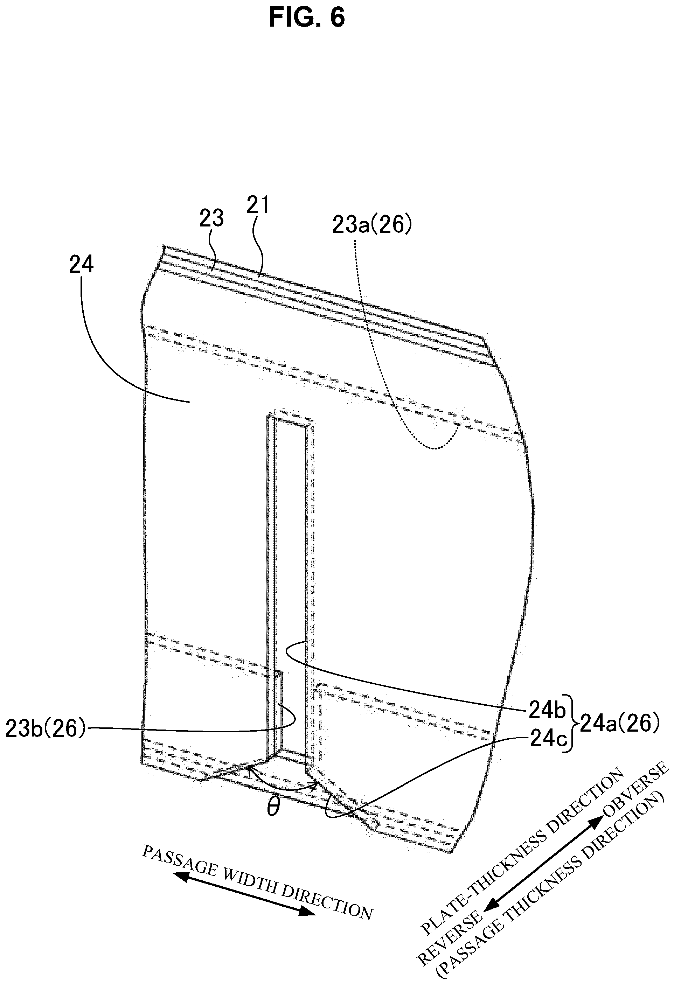

As shown in FIG. 4 and FIG. 5, the plurality of ejection cut-out portions 24a are spaced apart from each other along the lower edge of the second intermediate plate member 24, and are arranged over substantially the entire length in the longitudinal direction along the lower edge. Each of the ejection cut-out portions 24a is formed to extend in the up-down direction (in this example, the vertical direction of the second intermediate plate member 24) and to open downward. More specifically, as shown in FIG. 6, each ejection cut-out portion 24a includes a straight portion 24b in the form of a slit hole extending in the up-down direction, and a flared portion 24c connected to the lower end portion of the straight portion 24b. The flared portion 24c is formed such that the passage width (i.e., the dimension in a passage width direction orthogonal to the plate-thickness direction) increases from the upper side toward the lower side. In other words, the flared portion 24c is formed such that the passage width increases from the upstream side to the downstream side in the coolant ejecting direction. The passage width at the upper end position of the flared portion 24c equals to the passage width of the straight portion 24b. A flare angle θ of the flared portion 24c as seen in the plate-thickness direction is set to be, for example, not less than 120° and not more than 150°.

As shown in FIG. 5, the inlet opening 23a is a rectangular opening formed along the entire longitudinal direction of the first intermediate plate member 23. The inlet opening 23a is formed so as to span the plurality of ejection cut-out portions 24a when viewed in the plate-thickness direction. As shown in FIG. 5 and FIG. 6, the inlet opening 23a is formed such that the upper edge is positioned slightly above the upper end positions of the straight portions 24b of the ejection cut-out portions 24a, and the lower edge is located above the lower end positions of the straight portions 24b of the ejection cut-out portions 24a. Thus, the inlet opening 23a is formed so as to overlap a portion of the upper end side of the straight portion 24b of each ejection cut-out portion 24a (in this example, a range of approximately two-thirds of the upper end side of the straight portion 24b) when viewed in the plate-thickness direction.

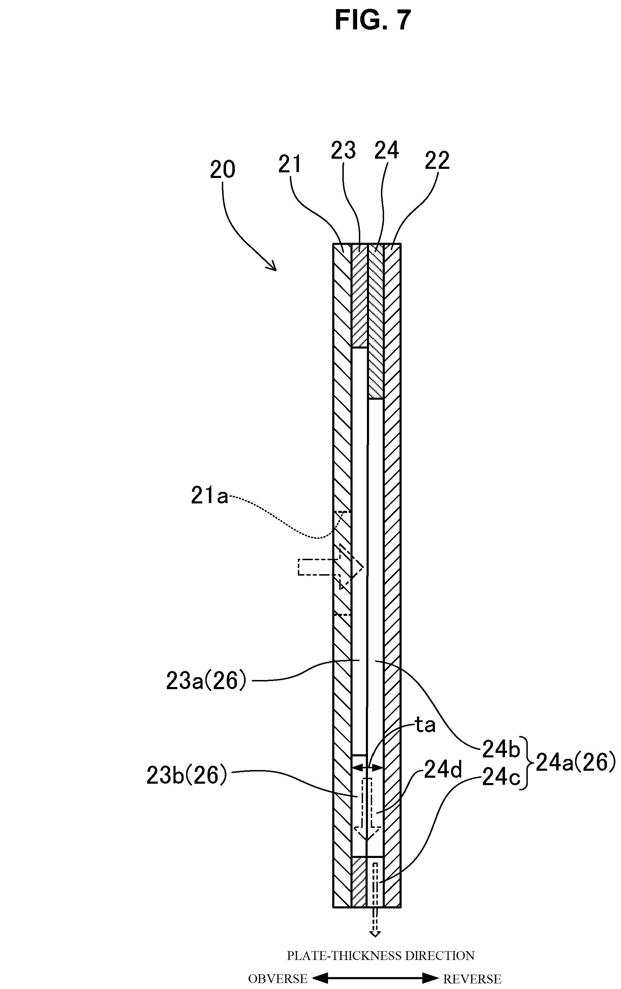

The plurality of inlet cut-out portions 23b are arranged spaced apart from each other along the lower edge of the inlet opening 23a, as shown in FIG. 4. Each of the inlet cut-out portions 23b is formed in a U-shape (an example of a recessed shape) and opens toward the inlet opening 23a side (in this example, the upper side). As shown in FIG. 6, each inlet cut-out portion 23b is formed so as to overlap with a portion of each ejection cut-out portion 24a formed in the second intermediate plate member 24 when viewed in the plate-thickness direction. More specifically, each inlet cut-out portion 23b is formed so as to overlap with the lower end portion of the straight portion 24b of each ejection cut-out portion 24a when viewed in the plate-thickness direction. Both edges in the width direction of each inlet cut-out portion 23b coincide with both edges in the width direction of each ejection cut-out portion 24a when viewed in the plate-thickness direction. As shown in FIG. 7, the lower end position of each inlet cut-out portion 23b coincides with the upper end position of the flared portion 24c of each ejection cut-out portion 24a.

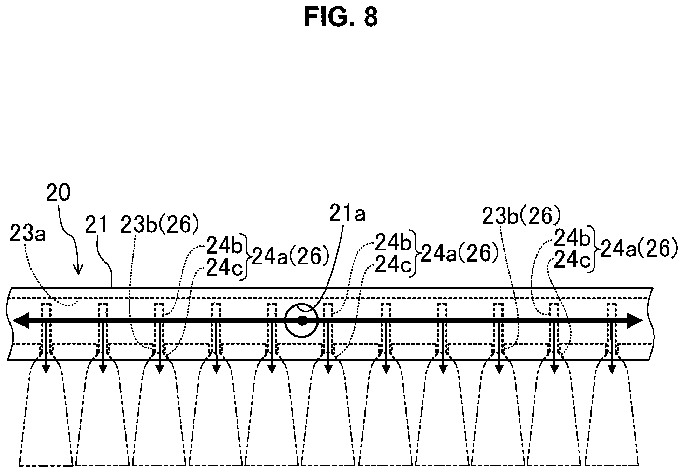

FIG. 8 is an explanatory diagram illustrating a coolant flow pathway in the fluid nozzle 20. As shown by the solid-line arrow in the figure, the coolant supplied to the coolant supply hole 21a from the obverse side of the fluid nozzle 20 (i.e., the front side of the sheet of FIG. 8) spreads to both sides in the left-right direction in FIG. 8, so as to fill the space inside the inlet opening 23a formed in the first intermediate plate member 23. After spreading, the coolant flows from the inlet opening 23a into each ejection cut-out portion 24a, and is then ejected in a film-like form from the flared portion 24c at the lower end of each ejection cut-out portion 24a (see the two-dot chain line in FIG. 8).

When the coolant flows from the inlet opening 23a into each ejection cut-out portion 24a, the cross-sectional area of the passage changes rapidly, increasing the conduit resistance and possibly resulting in an insufficient flow rate of coolant into each ejection cut-out portion 24a. In the present embodiment, on the other hand, the conduit resistance is reduced by providing the first intermediate plate member 23 with the plurality of inlet cut-out portions 23b that overlap with the ejection cut-out portions 24a, respectively, as viewed in the plate-thickness direction.

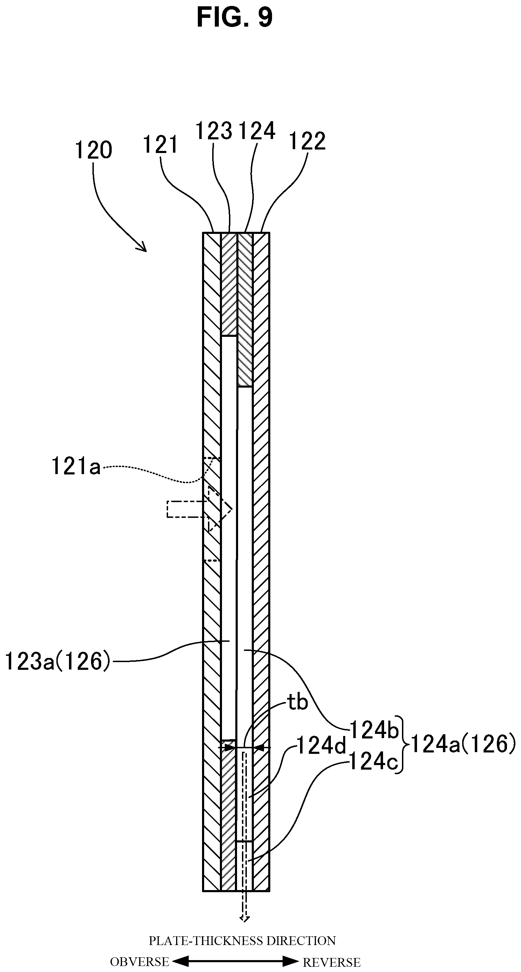

The reason why the conduit resistance can be reduced will be described based on comparison with a fluid nozzle 120 in a comparative example shown in FIG. 9. The fluid nozzle 120 of the comparative example is different from the present embodiment in that it does not have the above-described plurality of inlet cut-out portions 23b; however, the rest of the configurations are the same as the present embodiment. In FIG. 9, components identical to those in the present embodiment are shown by adding 100 to the reference characters used in the present embodiment.

This fluid nozzle 120 of the comparative example only ensures a passage thickness tb, which is equivalent to a single plate thickness, in a lower passage portion 124d, which is a portion positioned below the inlet opening 123a, of the ejection cut-out portion 124a (i.e., a portion the ejection cut-out portion 124a to which the coolant from the inlet opening 123a flows). In the fluid nozzle 20 of this embodiment, on the other hand, a passage thickness ta, which is equivalent to two plate thicknesses, is ensured in the lower passage portion 24d by communication between the inlet cut-out portion 23b formed in the first intermediate plate member 23 and the straight portion 24b of the ejection cut-out portion 24a, as shown in FIG. 7. Therefore, as compared to the fluid nozzle 120 of the comparative example, the fluid nozzle 20 of the present embodiment can reduce the conduit resistance by ensuring a sufficient passage thickness for the coolant flowing from the inlet opening 23a to the lower passage portion 24d of the ejection cut-out portion 24a. Accordingly, the inflow amount of the coolant to the lower passage portion 24d of the ejection cut-out portion 24a does not fall short, and consequently, the coolant can be reliably ejected from the lower end of the ejection cut-out portion 24a at a desirable flow rate and in a desirable shape.

Further, in the present embodiment, the open-side end portion of each ejection cut-out portion 24a is formed as the flared portion 24c whose dimension in the passage width direction increases from the upstream side to the downstream side in the fluid ejection direction (i.e., from the upper side to the lower side in FIG. 6).

With this configuration, the coolant that has reached the open-side end portion of each ejection cut-out portion 24a spreads in the passage width direction along the inner wall surface of the flared portion 24c and is ejected in a film-like form. Therefore, for example, the ejection range of the coolant can be widened as compared to a case in which the coolant is linearly ejected from each ejection cut-out portion 24a (see FIG. 8). This, in turn, allows the cleaning effect on the protective cover 9 by the coolant to be enhanced to the greatest extent possible.

Further, the lower end position of each inlet cut-out portion 23b is positioned at the same height as the upper end position of the flared portion 24c of each ejection cut-out portion 24a (refer to FIG. 6 and FIG. 7).

With this configuration, the coolant supplied to the inlet cut-out portion 23b through the inlet opening 23a can be supplied to a portion higher than the flared portion 24c in each ejection cut-out portion 24a. Therefore, the coolant can be smoothly spread without flow separation over the entire area from the upper end to the lower end of the flared portion 24c. Therefore, the effect of widening the coolant at the flared portion 24c can be reliably achieved.

The portion extending from the proximal end portion to the flared portion 24c of each ejection cut-out portion 24a is formed as the straight portion 24b that is a linear slit hole.

With this configuration, the coolant can be supplied to the flared portion 24c after sufficiently increasing the flow speed of the coolant by the slit-shaped straight portion 24b. Therefore, a sufficient flow speed of the coolant flowing into the flared portion 24c can be ensured, and consequently, the effect of widening the coolant at the flared portion 24c can be reliably achieved.

<<Other Embodiments>>

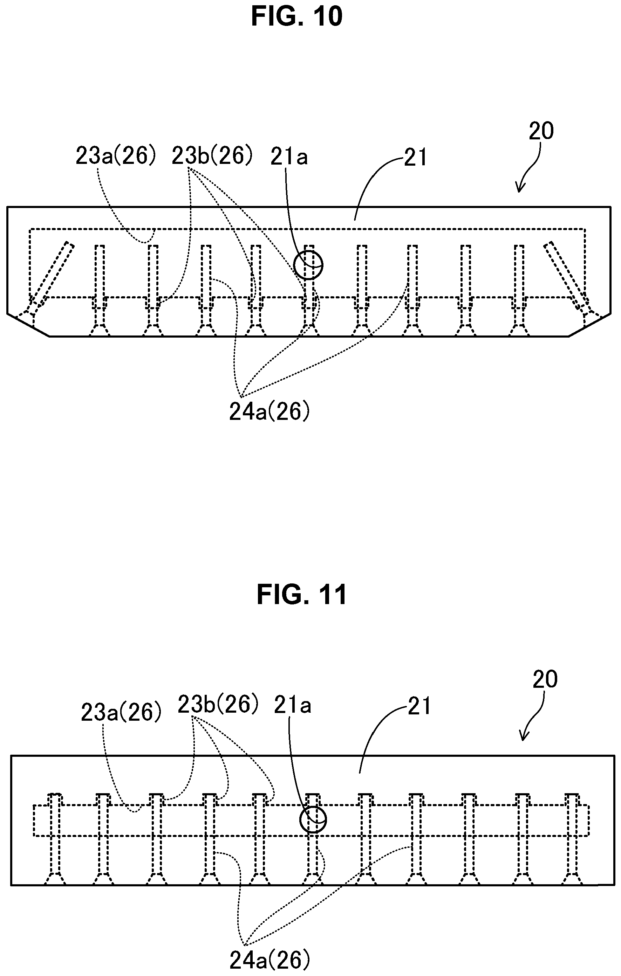

In the above embodiment, the outer edge shape of the fluid nozzle 20 is rectangular; however, the outer edge shape is not limited to this, and may be any shape such as a circular shape or a triangular shape, for example. As one example, FIG. 10 shows an example of a non-rectangular shape in which both end portions of the lower edge of the fluid nozzle 20 are chamfered. In FIG. 10 and in the later-described FIG. 11, the components identical to those in the present embodiment are given the same reference characters.

In the above embodiment, the fluid nozzle 20 is inclined at substantially 45° with respect to the vertical direction (Y-axis direction) such that the lower edge is located rearward of the upper edge when viewed from the X-axis direction. However, the present disclosure is not limited to this. That is, the inclination angle of the fluid nozzle 20 may exceed 45° or be less than 45°. Further, the fluid nozzle 20 may be arranged horizontally or vertically without inclination when viewed from the X-axis direction. Further, for example, when supplying the coolant to the surface of the workpiece W positioned within the machining area, the fluid nozzle 20 may be inclined such that its lower edge is positioned forward than its upper edge.

In the above embodiment, each inlet cut-out portion 23b formed in the first intermediate plate member 23 is formed in a U-shape that opens toward the inlet opening 23a side; however, the inlet cut-out portion 23b is not limited to this, and may be formed in a semicircular shape or a triangular shape, for example.

In the above embodiment, each inlet cut-out portion 23b formed in the first intermediate plate member 23 is formed to overlap with a portion of each ejection cut-out portion 24a that is located below the inlet opening 23a when viewed in the plate-thickness direction. However, the inlet cut-out portion 23b is not limited to this and may, for example, be formed to overlap with a portion of the ejection cut-out portion 24a that is located above the inlet opening 23a, as shown in FIG. 11. That is, each inlet cut-out portion 23b may be formed in any configuration as long as it overlaps with a portion of each ejection cut-out portion 24a when viewed in the plate-thickness direction. With this configuration, the passage thickness in the plate-thickness direction for the coolant flowing from the inlet opening 23a to each ejection cut-out portion 24a can be increased, thereby achieving the same effects as in the aforementioned embodiment.

In the above embodiment, the ejection cut-out portions 24a are formed, spaced apart from each other, along one edge (the lower edge side) of the second intermediate plate member 24. However, the present disclosure is not limited to this, and, for example, the ejection cut-out portions 24a may be formed, spaced apart from each other, along the entire edge of the second intermediate plate member 24. This allows the fluid to be ejected from the entire circumferential side of the fluid nozzle 20, thereby enabling the application range of the fluid nozzle 20 to be expanded in various ways.

In the above embodiment, the lower end position of the inlet cut-out portion 23b is at the same height as the upper end position of the flared portion 24c, but the present disclosure is not limited to this, and the inlet cut-out portion 23b may be positioned higher than the upper end position of the flared portion 24c. Thus, similarly to the aforementioned embodiment, the coolant can be smoothly spread without flow separation over the entire area from the upper end to the lower end of the flared portion 24c.

In the above embodiment, coolant was described as an example of the fluid to be ejected from the fluid nozzle 20. However, the fluid is not limited to this and may be another liquid such as water, or a gas such as air.

In the above embodiment, an example was described in which the fluid nozzle 20 is arranged near the upper end of the sheet metal frame 15 of the machine tool 1. However, the present disclosure is not limited to this, and the fluid nozzle 20 may, for example, be provided at a shutter opening/closing unit of a tool exchange device provided in the machine tool 1. Further, the fluid nozzle 20 is not limited to cleaning cutting chips, and may also be used for various purposes such as blocking dust with a fluid or dispersing gas using an air cleaner or an air conditioner.

Note that the above description of embodiments is in all respects illustrative and not restrictive. Modifications and variations can be made as appropriate by a person skilled in the art. The scope of the present disclosure is indicated by the claims, not by the embodiments described above. Further, the scope of the present invention encompasses modifications of the embodiments that fall within the scope of the patent claims and the equivalents.

### [LISTING OF REFERENCE CHARACTERS]

20: Fluid Nozzle
21: Obverse Side Plate Member
21a: Coolant Supply Hole (Fluid Supply Hole)
22: Back Side Plate Member
23: First Intermediate Plate Member
23a: Supply Opening (Fluid Passage)
23b: Supply Cut-Out Portion (Fluid Passage)
24: Second Intermediate Plate Member
24a: Ejection Cut-Out Portion (Fluid Passage)
24b: Straight Portion
24c: Flared Portion
26: Fluid Passage

## Claims

1. A fluid nozzle configured to eject a fluid, wherein:
the fluid nozzle is configured by stacking a plurality of plate members in a plate-thickness direction;
the plurality of plate members comprises:
an obverse side plate member having a fluid supply hole penetrating in the plate-thickness direction;
a reverse side plate member arranged on a reverse side of the obverse side plate member; and
a first intermediate plate member and a second intermediate plate member that are sequentially arranged from the obverse side toward the reverse side in the plate-thickness direction between the obverse side plate member and the reverse side plate member and have a fluid passage formed therein;
the second intermediate plate member has a plurality of ejection cut-out portions that are aligned and spaced apart from each other along an outer edge of the second intermediate plate member and open to the outer edge side;
the first intermediate plate member has an inlet opening that is formed to span the plurality of ejection cut-out portions formed in the second intermediate plate member when viewed in the plate-thickness direction, the inlet opening receives a fluid supplied from the fluid supply hole and guides the fluid to each of the ejection cut-out portions, and a plurality of inlet cut-out portions that are connected to an outer edge of the inlet opening, wherein each of the inlet cut-out portions, when viewed in the plate-thickness direction, has a recessed shape that opens to the inlet opening side and overlaps with a portion of each of the plurality of ejection cut-out portions; and
the inlet opening, the plurality of inlet cut-out portions, and the plurality of ejection cut-out portions form the fluid passage.

2. The fluid nozzle of claim 1, wherein an open-side end portion of each of the ejection cut-out portions is formed as a flared portion whose dimension in a passage width direction orthogonal to the plate-thickness direction increases from an upstream side to a downstream side in a fluid ejection direction.

3. The fluid nozzle of claim 2, wherein:
the obverse side plate member, the reverse side plate member, the first intermediate plate member and the second intermediate plate member are vertically arranged;
each of the ejection cut-out portions is formed to open downward; and
a lower end position of each of the inlet cut-out portions is at the same height as, or higher than, an upper end position of the flared portion of each of the ejection cut-out portions.

4. The fluid nozzle of claims 2 or 3, wherein a portion extending from a proximal end portion to the flared portion of each of the ejection cut-out portions is formed as a straight portion comprising a linear slit hole.
